# DEMANDE DE BREVET EUROPEEN

(11) **EP 1 255 317 A1**
(43) Date de publication de la demande: **06.11.2002**
(21) Numéro de dépôt: 02290979.0
(22) Date de dépôt: 18.04.2002
(51) Int. Cl.: H01M 8/04, F01P 11/20

(54) **Dispositif de gestion thermique d'un véhicule automobile**

(30) Priorité: 20.04.2001 FR 0105348
(71) Demandeur: Renault s.a.s., 92100 Boulogne Billancourt (FR)
(72) Inventeur: Olivier, Gérard, 78380 Bougival (FR); Samuel, Sébastien, 78000 Versailles (FR); Oulefki, Abdelhakim, 93300 Aubervilliers (FR)

(57) **Abrégé**

Il comprend un circuit de refroidissement d'organes ou volumes (1, 2, 3, 6, 7) du véhicule, pour la régulation en température de ceux-ci, et un réservoir (R) d'un fluide. Suivant l'invention, il comprend en outre a) des moyens (C, V₁ à V₃) pour connecter sélectivement, en relation de transfert thermique, au moins une entrée du réservoir (R) avec des premier (P₁, P₂) et deuxième (P₃) points du circuit présentant des première (T₁, T₂) et deuxième (T₃) températures de fluide, respectivement supérieure et inférieure à la température (TR) du fluide contenu dans le réservoir et b) des moyens (C, V₄) pour connecter sensiblement simultanément une sortie du réservoir à un troisième point (P₄) du circuit, de manière à commander des échanges thermiques entre le circuit et le réservoir (R) propres à assister, selon les conditions de fonctionnement du véhicule, le circuit de fluide dans sa fonction de régulation de température.

Application à un véhicule équipé d'une pile à combustible.

## Description

La présente invention est relative à un dispositif de gestion thermique d'un véhicule automobile comprenant au moins un circuit de fluide en relation de transfert thermique avec une pluralité d'organes ou volumes dudit véhicule, pour la régulation en température de ceux-ci, et au moins un réservoir d'un fluide en relation de transfert thermique avec ledit circuit de fluide. Plus particulièrement, l'invention est relative à un tel dispositif adapté à la gestion thermique d'un véhicule équipé d'une pile à combustible.

Les véhicules automobiles propulsés par de l'énergie électrique venue d'une pile à combustible apparaissent de plus en plus comme une solution prometteuse au problème de la pollution de l'air par les véhicules actuels, majoritairement propulsés par des moteurs à combustion interne.

Les piles à combustible à membrane échangeuse de protons sont bien adaptées à la propulsion de véhicules automobiles car elles utilisent un carburant et fonctionnent couramment dans un domaine de température acceptable, typiquement entre 20° et 100°C environ. En fonctionnement à charge maximale, de telles piles dégagent cependant une quantité de chaleur considérable, sensiblement double de celle d'un moteur à combustion interne assurant la propulsion du même véhicule. La régulation de la température de la pile au moyen d'une circulation d'un fluide de refroidissement du type couramment utilisé dans les véhicules automobiles classiques est alors délicate, d'autant que les températures de fonctionnement des divers organes équipant un tel véhicule sont disparates, certains ne pouvant supporter des températures supérieures à 55°C alors que d'autres peuvent être portées à 120°C, voire à plusieurs centaines de degrés (par exemple le reformeur qui produit de l'hydrogène à partir du carburant précité).

Le circuit de refroidissement qui équipe classiquement les véhicules automobiles propulsés par un moteur à combustion interne, à radiateur frontal associé à un groupe moto-ventilateur, s'avère alors insuffisant pour évacuer la quantité de chaleur très importante dégagée par une pile à combustible fonctionnant à charge maximale.

On connaît du brevet US-A-4 761 967 un appareil pour commander la température régnant dans l'habitacle d'un véhicule automobile, faisant usage d'un réservoir de fluide capable de stocker de l'énergie thermique pour la relarguer sélectivement de manière à assurer le conditionnement de l'air de l'habitacle. Le brevet précité est limité au traitement du problème du conditionnement de cet air et ne s'intéresse pas aux véhicules équipés d'une pile à combustible et aux problèmes spécifiques que ces véhicules posent.

La présente invention a précisément pour but de réaliser un dispositif de gestion thermique d'un véhicule automobile propre à renforcer l'efficacité d'un circuit de refroidissement classique quand la charge de celui-ci est forte, comme c'est le cas notamment dans un véhicule automobile propulsé par de l'énergie électrique fournie par une pile à combustible fonctionnant sous charge maximale.

La présente invention a aussi pour but de réaliser un tel dispositif qui permette également d'assurer une mise à température rapide du circuit de refroidissement, au démarrage à froid du véhicule automobile, de manière à réduire les émissions d'espèces chimiques polluantes pendant ce démarrage et l'inertie du circuit de refroidissement.

La présente invention a également pour but de réaliser un tel dispositif qui soit d'architecture simple et de temps de développement court.

On atteint ces buts de l'invention, ainsi que d'autres qui apparaîtront à la lecture de la description qui va suivre, avec un dispositif de gestion thermique d'un véhicule automobile comprenant au moins un circuit de fluide en relation de transfert thermique avec une pluralité d'organes ou volumes dudit véhicule, pour la régulation en température de ceux-ci, et au moins un réservoir d'un fluide en relation de transfert thermique avec ledit circuit de fluide, ce dispositif étant remarquable en ce qu'il comprend a) des moyens pour connecter sélectivement, en relation de transfert thermique, au moins une entrée dudit réservoir avec des premier et deuxième points dudit circuit de fluide présentant des première et deuxième températures de fluide, respectivement supérieure et inférieure à la température du fluide contenu dans ledit réservoir et b) des moyens pour connecter sensiblement simultanément au moins une sortie dudit réservoir à un troisième point dudit circuit de fluide, de manière à commander des échanges thermiques entre ledit circuit et ledit réservoir, propres à assister, selon les conditions de fonctionnement dudit véhicule, ledit circuit de fluide dans sa fonction de régulation de température.

Suivant d'autres caractéristiques de la présente invention :
- le circuit de fluide traverse une pile à combustible et ledit premier point dudit circuit est situé en sortie de ladite pile à combustible,
- ledit troisième point est situé en amont de ladite pile à combustible,
- le dispositif comprend, outre ledit circuit de fluide, de refroidissement, un circuit de climatisation parcouru par un fluide frigorigène, les deux circuits étant couplés thermiquement au niveau d'un échangeur connecté au circuit de fluide de refroidissement en sortie de ladite pile à combustible, dans une branche du circuit monté en parallèle sur un radiateur formant partie du circuit,
- ledit deuxième point est placé dans ledit circuit de refroidissement, en sortie dudit échangeur,
- le fluide circulant dans le circuit de fluide est de même nature que celui contenu dans le réservoir qui communique directement avec ledit circuit de fluide.

D'autres caractéristiques optionnelles et avantages apportés par la présente invention apparaîtront à la lecture de la description qui va suivre et à l'examen du dessin annexé dans lequel :
- la figure 1 est un schéma des connexions du réservoir de liquide du dispositif suivant l'invention,
- la figure 2 est un schéma d'un mode de réalisation du dispositif suivant l'invention, incorporé à un véhicule équipé d'un circuit, ou boucle, de fluide de refroidissement en contact de transfert thermique avec divers organes et volumes dudit véhicule, notamment avec une pile à combustible, et
- la figure 3 est un schéma d'un autre mode de réalisation du dispositif suivant l'invention, incorporé à un véhicule comprenant, outre une boucle de fluide de refroidissement, une deuxième boucle chargée d'un liquide frigorigène assurant la climatisation du véhicule.

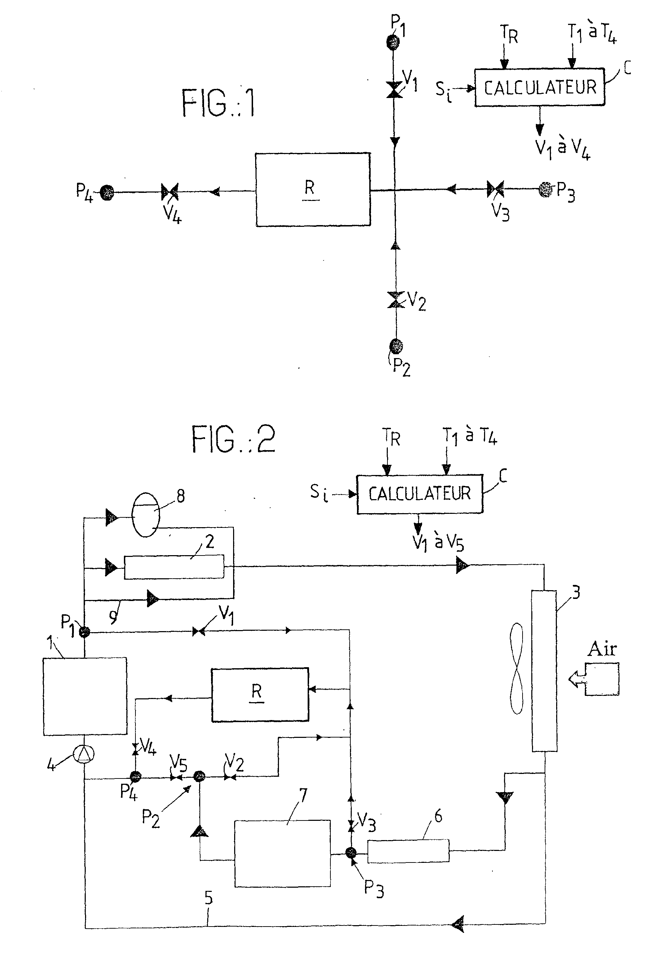

On se réfère à la figure 1 du dessin annexé où l'on a représenté un réservoir R contenant un fluide de refroidissement tel qu'un liquide chargé de sels fondus, par exemple. Ce réservoir est susceptible d'être connecté à un circuit, ou boucle, de refroidissement classique de véhicule automobile par au moins deux entrées et au moins une sortie. Dans le mode de réalisation représenté, l'entrée du réservoir R est connecté à trois points P₁, P₂, P₃ de ce circuit et sa sortie à un point P₄. Des électrovannes V₁ à V₄, commandées par un calculateur C et installées dans les lignes raccordant les points P₁ à P₄, respectivement, au réservoir R, commandent la mise en communication de ce réservoir avec ces points du circuit de refroidissement. Dans le dispositif représenté à la figure 1, le fluide qui circule dans le circuit de fluide est classiquement un liquide, le même que celui contenu dans le réservoir, et le liquide qui circule dans le circuit est "chaud" aux points P₁ et P₂ et "froid" au point P₃. On peut ainsi commander les électrovannes V₁ à V₄ de manière à mettre en stock dans le réservoir R un liquide "froid" ou "chaud".

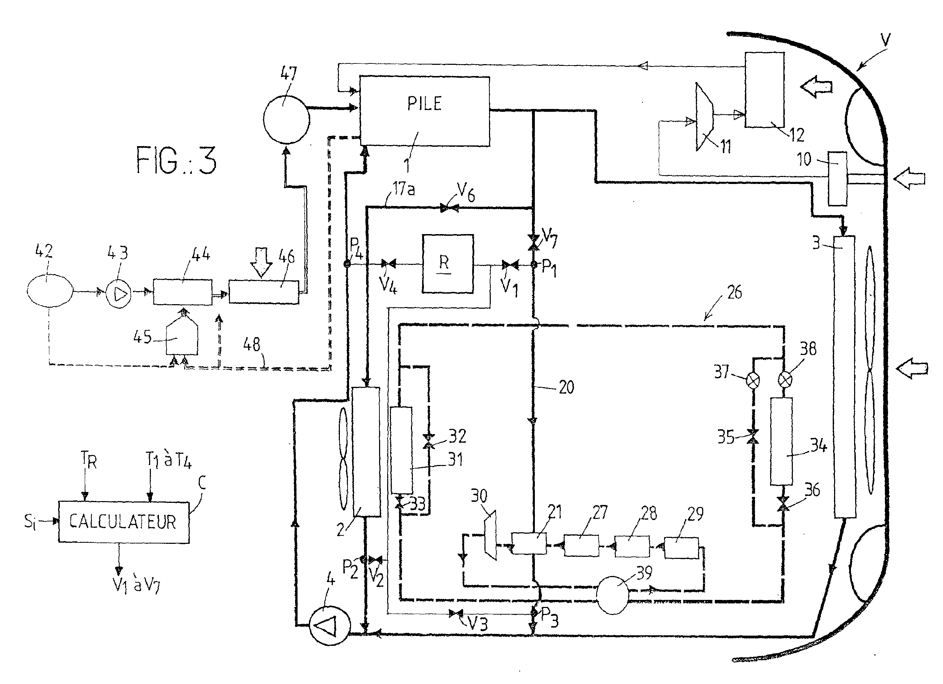

Dans la présente description, les mots "chaud" et "froid" doivent être pris dans leur sens relatif. C'est ainsi que, si le circuit de refroidissement passe, comme on le verra en liaison avec les figures 2 et 3, par un organe tel qu'une pile à combustible fonctionnant par exemple à la température de 80°C, le liquide contenu dans le réservoir R sera considéré comme "froid" s'il s'y trouve à la température de 30°. Au contraire, si l'organe est à 5° et que le liquide du réservoir R est à 50°C, ce dernier sera considéré comme "chaud".

Des capteurs de température (non représentés) de tout type connu, délivrent au calculateur C des signaux représentatifs de la température TR du liquide contenu dans le réservoir R et des températures T₁, T₂, T₃, T₄ du liquide aux points P₁, P₂, P₃, P₄ respectivement. D'autres signaux Sᵢ (i entier) sont délivrés au calculateur C pour rendre compte, notamment, de l'état de fonctionnement du véhicule.

On va maintenant décrire le fonctionnement du dispositif de gestion thermique suivant l'invention, comprenant le réservoir R de la figure 1, connecté à travers les électrovannes V₁ à V₄) aux points P₁ à P₄ d'un circuit de refroidissement de véhicule automobile, le liquide circulant aux points P₁ et P₂ étant normalement "chaud" par rapport à celui contenu dans le réservoir R alors que celui circulant au point P₃ est "froid".

D'une manière générale le réservoir R est utilisé, suivant la présente invention, en réservoir "tampon" de calories ou de frigories, stockées dans le réservoir pour être sélectivement relarguées ultérieurement dans le circuit de refroidissement de manière à réchauffer ou refroidir, selon les besoins, le liquide circulant dans le circuit de fluide.

L'intérêt de cette disposition apparaîtra dans la description qui va suivre du fonctionnement du dispositif suivant 1'invention :
1) lors d'un démarrage à froid du véhicule,
2) en fonctionnement stabilisé à chaud du circuit de refroidissement,
3) en fonctionnement stabilisé à froid de ce circuit, et
4) à l'arrêt du véhicule,
ces situations étant choisies à titre d'exemple illustratif et non limitatif, seulement.

### 1) Démarrage à froid du véhicule

Le liquide du circuit de refroidissement est alors à une température voisine de la température ambiante, toujours inférieure à la température de fonctionnement idéale des divers organes en relation de transfert thermique avec ce liquide, notamment dans le cas d'un véhicule à propulsion électrique (pile à combustible, moteur électrique et son onduleur associé, reformeur, etc...).

Suivant l'invention, avant le dernier arrêt du véhicule, les vannes V₁ à V₄ ont été commandées par le calculateur C de manière qu'un liquide chaud soit stocké dans le réservoir R. Ainsi lors du démarrage du véhicule, on dispose d'une réserve de liquide chaud (par exemple à 70°C).

Suivant l'invention, on injecte alors ce liquide chaud dans le circuit de refroidissement pour aider les organes ou volumes (habitacle, etc...) du véhicule qui sont en relation de transfert thermique avec le liquide du circuit, à atteindre rapidement leur température de consigne ou de régime. Pour ce faire le calculateur C commande une circulation de liquide dans le réservoir, propre à relarguer le liquide chaud du réservoir R dans le circuit de refroidissement. La stratégie appliquée alors par le réservoir peut être la suivante :
a) le calculateur compare les températures T₁ et T₂ et sélectionne la plus basse (Tₘᵢₙ) des deux, soit Tₘᵢₙ = MIN (T₁, T₂)
b) si Tₘᵢₙ < TR, le calculateur commande l'ouverture de l'électrovanne V₄ et, sensiblement simultanément, celle de l'électrovanne (V₁ ou V₂) qui se trouve sur la ligne connectée au point (P₁ ou P₂) ou la température est égale à Tₘᵢₙ.

La circulation de liquide qui s'ensuit, à travers le réservoir R, a pour effet de réchauffer le liquide qui circule dans le circuit de refroidissement et de refroidir celui contenu dans le réservoir R.

Quand le calculateur détecte que les températures dans le circuit et dans le réservoir R s'équilibrent pratiquement, il commande la fermeture des électrovannes ouvertes, la circulation de liquide dans le réservoir R n'ayant plus de raison d'être.

### 2) Fonctionnement stabilisé "à chaud"

Le véhicule ayant roulé pendant un certain temps, après un démarrage à froid, le liquide contenu dans le circuit de refroidissement peut atteindre une température telle que le radiateur qui équipe normalement le circuit de refroidissement ne permet plus d'équilibrer les flux de calories entrant et sortant de ce circuit.

Dans le même temps, le réservoir R ayant été isolé du circuit de refroidissement voit sa température baisser, pour revenir sensiblement à la température ambiante (20°C).

Le liquide contenu dans le réservoir R pourrait aussi être considéré comme "froid" pour avoir été stocké alors que le radiateur précité permettait de refroidir efficacement ce liquide.

Suivant l'invention on va utiliser ce liquide "froid" pour abaisser la température du liquide du circuit de refroidissement.

Pour ce faire le calculateur C repère le point du circuit (P₁ ou P₂) où la température Tₘₐₓ est la plus élevée (Tₘₐₓ = MAX (T₁, T₂)) et vérifie que la température TR du liquide du réservoir est inférieure à Tₘₐₓ. Dans l'affirmative il ouvre l'électrovanne V₄ et la vanne (V₁ ou V₂) correspondant à Tₘₐₓ. Le liquide du réservoir R passe alors dans le circuit de refroidissement en abaissant la température du liquide de ce circuit.

Le fonctionnement se poursuit jusqu'à ce que Tₘₐₓ ≅ TR, moment auquel le calculateur C isole de nouveau le réservoir du circuit en refermant les électrovannes ouvertes.

On comprend que, dans la situation décrite ci-dessus, le dispositif suivant la présente invention permet de passer sans dommage des phases de surchauffe temporaire du liquide du circuit de refroidissement et donc d'améliorer la régulation de la température des organes refroidis par ce liquide.

### 3) Fonctionnement stabilisé "à froid"

C'est un fonctionnement que l'on observe quand le véhicule roule depuis un certain temps, sans mettre en difficulté le circuit de refroidissement, le circuit restant à une température largement inférieure aux températures de consigne des organes qu'il refroidit.

Suivant l'invention, on en profite pour refroidir le liquide contenu dans le réservoir R. Pour ce faire, le calculateur C compare la température T₃ au point "froid" P₃ du circuit à la température TR du liquide du réservoir et, si T₃ < TR, le calculateur C commande l'ouverture des électrovannes V₄ et V₃.

Dès que T₃ ≅ TR, le calculateur C referme les électrovannes V₃ et V₄. Le liquide "froid" ainsi stocké dans le réservoir R pourra ensuite aider le circuit de refroidissement à franchir une phase ultérieure de surchauffe.

### 4) Arrêt du véhicule

Le véhicule venant de s'arrêter, il est intéressant de recharger le réservoir R en calories, en vue d'un démarrage à froid ultérieur. Pour ce faire le calculateur compare T₁ et T₂ pour relever Tₘₐₓ = MAX (T₁, T₂) et compare Tₘₐₓ à TR. Si Tₘₐₓ > TR, il commande l'ouverture de l'électrovanne V₄ et de l'électrovanne commandant le point à la température Tₘₐₓ tout en réactivant une pompe (non représentée) de circulation du liquide dans le circuit de refroidissement. Du liquide chaud traverse alors le réservoir R jusqu'à ce que TR ≈ Tₘₐₓ, moment auquel le calculateur C referme les électrovannes précédemment ouvertes et arrête la pompe.

On se réfère maintenant à la figure 2 du dessin annexé pour décrire un premier mode de réalisation d'un dispositif de gestion thermique d'un véhicule automobile, fonctionnant comme décrit ci-dessus, le véhicule étant équipé d'une pile à combustible 1 fournissant, par exemple, de l'énergie électrique à un moteur électrique de propulsion du véhicule. Le véhicule est équipé d'un circuit de refroidissement traversant, en série, la pile à combustible 1, un aérotherme 2 de chauffage de l'habitacle du véhicule, un radiateur principal 3 (disposé frontalement dans le véhicule), et une pompe 4 placée en amont de la pile 1 dans le circuit, pour faire circuler un fluide dans ce circuit, ce fluide étant classiquement constitué par un liquide.

En parallèle sur une branche 5 du circuit reliant le radiateur 3 à la pompe 4, on trouve un radiateur complémentaire 6 disposé en amont de plusieurs organes (moteur électrique, batterie, composants électroniques, etc...), référencés globalement 7, à refroidir à l'aide du liquide ayant traversé ce radiateur. Un vase d'expansion 8 est monté en parallèle sur l'aérotherme 2. Une dérivation 9 peut être sélectivement activée à l'aide d'une électrovanne (non représentée) pour court-circuiter l'aérotherme quand l'habitacle ne doit pas être chauffé.

On retrouve également, dans ce dispositif le réservoir R, les électrovannes V₁ à V₄, les points P₁ à P₄ et le calculateur C du dispositif de la figure 1.

Comme on l'a vu plus haut, les points P₁ et P₂ doivent être raccordés à des points relativement "chauds" du circuit de refroidissement soit, comme représenté, à la sortie de la pile à combustible 1 et à celle des organes 7 à refroidir respectivement. Le point P₃, normalement "froid" est placé à la sortie du deuxième radiateur 6. Le point P₄ est placé à l'entrée de la pile à combustible 1, en amont de la pompe 4.

L'électrovanne V₅ se ferme si l'électrovanne V₂ est ouverte de manière à permettre au réservoir R de se vider dans le circuit (V₄ étant ouverte). En général V₅ s'ouvre et V₂ se ferme quand le circuit de refroidissement est à une température convenable, n'exigeant pas de régulation.

On a représenté à la figure 3 du dessin annexé un autre mode de réalisation du dispositif suivant l'invention comportant, outre un circuit de refroidissement (du même type que celui du dispositif de la figure 2), un circuit de climatisation 26, représenté en trait fort interrompu, dans lequel circule un fluide frigorigène, les deux circuits étant thermiquement couplés au niveau d'un échangeur, comme on le verra plus loin. Le dispositif de la figure 3 est essentiellement constitué par celui représenté à la figure 1 de la demande de brevet français N° 00 02771 déposée le 3 mars 2000 par la demanderesse, augmenté du réservoir R, des lignes de connexion associées et du calculateur C représentés à la figure 1 de la présente demande de brevet.

On décrit sommairement dans la suite le dispositif représenté à la figure 3, décrit complètement dans la demande de brevet français précitée, demande à laquelle on se reportera pour plus de détails sur ce dispositif.

On retrouve dans le circuit de refroidissement du dispositif de la figure 3, la pile à combustible 1, l'aérotherme 2 de conditionnement d'air de l'habitacle, le radiateur 3 et la pompe 4 du circuit de la figure 2. Si les organes 1, 3, 4 sont disposés en boucle (en trait fort) comme dans cette dernière figure, l'aérotherme 2 est monté en parallèle sur une partie de la boucle, entre la sortie de la pile 1 et l'entrée de la pompe 4, en série avec une électrovanne V₆ de commande de l'alimentation de cet aérotherme.

L'air nécessaire à la réaction chimique qui s'opère dans la pile 1 est aspirée de l'extérieur (à l'avant du véhicule V), à travers un filtre à air 10, par un compresseur 11 et refroidi dans un échangeur air/air 12 avant d'être introduit dans la pile 1.

Le circuit 26, en boucle, de climatisation du dispositif de la figure 3 est du type à compression de vapeur et comprend essentiellement un compresseur 30, un condenseur 34 et un évaporateur 31 en série avec le condenseur 34. Le circuit comprend en outre un échangeur de chaleur 21 et des évaporateurs 27, 28, 29 disposés en série entre une vanne d'inversion 39 et l'entrée du compresseur 30. La vanne d'inversion 39, à quatre voies, permet de faire fonctionner la boucle aussi en pompe à chaleur.

La boucle 26 est interconnectée, thermiquement, avec la boucle de refroidissement à travers l'échangeur 21 monté en parallèle sur le radiateur 3 et traversé par une ligne 20 raccordant la sortie de la pile 1 à l'entrée de la pompe 4 et commandée par une électrovanne V₇. L'échangeur 21 permet de transférer des calories d'une boucle vers l'autre. En situation stabilisée, en cas de pic (quand le radiateur 3 est insuffisant) la boucle de refroidissement peut évacuer des calories dans la boucle de climatisation et l'échangeur 21 se comporte alors en évaporateur dans cette dernière boucle.

L'évaporateur 31 peut être court-circuité par une vanne 32. Une vanne 33 placée en série avec l'évaporateur 31 agit en clapet anti-retour pour empêcher le fluide frigorigène circulant dans la boucle 26 de circuler à contre sens dans l'évaporateur 31.

Le condenseur 34 peut être court-circuité par une commande appropriée de vannes 35 (placée en dérivation) et 36 (en série) disposées en parallèle dans deux branches équipées de détendeurs 37, 38 respectivement.

Le fonctionnement du dispositif décrit ci-dessus est explicité dans la demande de brevet français 00 02771 précitée à laquelle on pourra se reporter pour plus de détails.

Suivant la présente invention, le dispositif de la figure 3 est équipé, en outre, du réservoir R et des lignes de connexion de ce réservoir à la boucle de refroidissement, à des points de connexion P₁ à P₄ judicieusement choisis.

C'est ainsi que le point chaud P₁ est placé en sortie de la pile 1, alors que l'autre point chaud P₂ peut être placé, comme représenté, en sortie de l'aérotherm 2 et peut servir lorsque la vanne V₇ est fermée, par exemple. Le point froid P₃ peut être placé, comme représenté, à la sortie de l'échangeur 21 et peut servir quand la vanne V₇ est ouverte. La température du point P₃ est la plus basse du circuit de refroidissement, en situation stabilisée. Le point de sortie P₄ du réservoir R est connecté à l'entrée de la pile 1.

Il apparaît maintenant que l'invention permet bien d'atteindre les objectifs fixés, à savoir fournir un dispositif de gestion thermique d'un véhicule automobile équipé d'une pile à combustible, propre à renforcer l'efficacité d'un circuit de refroidissement classique quand la charge de celui-ci est forte, ou à assurer une mise à température rapide des organes ou volumes conditionnés par ce circuit, notamment lors d'un démarrage à froid du véhicule, le tout à l'aide d'un dispositif d'architecture simple pouvant être développé rapidement à coût contenu.

Bien entendu l'invention n'est pas limitée aux modes de réalisation décrits et représentés ci-dessus, qui n'ont été donnés qu'à titre d'exemple. C'est ainsi que le liquide contenu dans le réservoir R, supposé le même que celui du circuit de refroidissement, dans la description précédente, pourrait aussi être différent. Dans ce cas les points P₁ à P₄ sont équipés d'échangeurs de chaleur. Le fluide spécifique au réservoir R circule alors en circuit fermé entre les points (P₁ ou P₂) ou P₃, et P₄, et le réservoir R.

Le réservoir R pourrait contenir une zéolite, du charbon actif, de l'hydroxyde de baryum ou des sels fondus tels que les nitrates de magnésium ou de lithium, et un fluide de refroidissement identique à celui du circuit de refroidissement, comme on l'a vu plus haut.

Le nombre de points d'entrée "chauds" n'est pas limité à 2 et il peut y avoir aussi plusieurs points d'entrée "froids" et plusieurs points de sortie du réservoir R. Le calculateur C sélectionne les points actifs selon les stratégies exposées ci-dessus.

Dans le cas où, comme représenté à la figure 3, la pile à combustible est alimentée par un dispositif comprenant un réservoir 42 de carburant, une pompe 43, un reformeur 44 chauffé par un brûleur 45, l'hydrogène sortant du reformeur traverse successivement un échangeur de chaleur 46 et un régulateur de débit 47, le reformeur 44 pouvant être refroidi ou réchauffé par le réservoir R.

Les points "chauds" d'alimentation du réservoir R peuvent être variés : condenseur de la boucle de climatisation, sortie de produits d'échappement (de la pile, du reformeur, etc...) , de même que le ou les points "froids" (évaporateur de la boucle de climatisation, échangeur avec l'air climatisé de l'habitacle du véhicule, échangeur avec l'air extérieur, etc...).

Le point d'entrée "froid" peut être placé au niveau d'un évaporateur d'une boucle principale ou secondaire de climatisation à compression de vapeur, dont le compresseur est entraîné par récupération de l'énergie de freinage du véhicule, d'une turbine quelconque ou de tout autre source d'énergie améliorant le rendement énergétique global du véhicule.

Le réservoir R pourrait aussi participer (même partiellement) au confort thermique de l'habitacle, notamment quand le point "froid" du réservoir R possède un potentiel de refroidissement important permettant d'éviter un recours systématique à la boucle de climatisation à compression de vapeur.

En saison chaude on peut programmer le calculateur pour que les frigories emmagasinées à l'arrêt dans le réservoir soient injectées dans l'habitacle au redémarrage du véhicule. En saison froide les calories emmagasinées à l'arrêt dans le réservoir peuvent être injectées dans l'habitacle, au redémarrage suivant.

Le réservoir R peut aussi être commandé par le calculateur de manière à stocker des calories lorsque le point chaud dépasse une consigne donnée et injecter ces calories dans le circuit lorsque la température de celui-ci descend en dessous d'une consigne fixée, et ceci afin d'améliorer le rendement de la pile à combustible, par exemple.

L'emplacement du réservoir de stockage peut être quelconque, en fonction des volumes disponibles de chaque véhicule. Il peut être placé dans un boîtier de chauffage et équipé d'un ensemble de volets qui se referment pour isoler le réservoir R ou, au contraire, s'ouvrent pour le refroidir, la chaleur ou le froid produits par le réservoir R pouvant être injectés dans l'habitacle ou rejetés vers l'extérieur.

Le dispositif suivant l'invention pourrait aussi inclure tout organe complémentaire utile ou nécessaire (pompe, électrovanne, etc...) . C'est ainsi qu'une pompe pourrait être installée entre la sortie du réservoir R et le point P₄.

On a décrit ci-dessus la présente invention dans le contexte où elle trouve plus particulièrement application, à savoir celui d'un véhicule équipé d'une pile à combustible. L'invention peut cependant trouver aussi application dans un véhicule automobile non équipé d'un telle pile.

## Revendications

1. Dispositif de gestion thermique d'un véhicule automobile comprenant au moins un circuit de fluide en relation de transfert thermique avec une pluralité d'organes ou volumes dudit véhicule, pour la régulation en température de ceux-ci, et au moins un réservoir (R) d'un fluide en relation de transfert thermique avec ledit circuit de fluide, **caractérisé en ce qu'**il comprend a) des moyens (C, V₁ à V₃) pour connecter sélectivement, en relation de transfert thermique, au moins une entrée dudit réservoir (R) avec des premier (P₁, P₂) et deuxième (P₃) points dudit circuit de fluide présentant des première (T₁, T₂) et deuxième (T₃) températures de fluide, respectivement supérieure et inférieure à la température (TR) du fluide contenu dans ledit réservoir et b) des moyens (C, V₄) pour connecter sensiblement simultanément au moins une sortie dudit réservoir à un troisième point (P₄) dudit circuit de fluide, de manière à commander des échanges thermiques entre ledit circuit et ledit réservoir (R) propres à assister, selon les conditions de fonctionnement dudit véhicule, ledit circuit de fluide dans sa fonction de régulation de température.

2. Dispositif conforme à la revendication 1, **caractérisé en ce que** ledit circuit de fluide traverse une pile à combustible (1) et **en ce que** ledit premier point (P₁) dudit circuit est situé en sortie de ladite pile à combustible (1).

3. Dispositif conforme à la revendication 2, **caractérisé en ce que** ledit troisième point (P₄) est situé en amont de ladite pile à combustible (1).

4. Dispositif conforme à l'une quelconque des revendications 1 à 3, **caractérisé en ce qu'**il comprend, outre ledit circuit de fluide, de refroidissement, un circuit de climatisation (26) parcouru par un fluide frigorigène, les deux circuits étant couplés thermiquement au niveau d'un échangeur (21) connecté au circuit de fluide de refroidissement, en sortie de ladite pile à combustible (1), dans une branche dudit circuit monté en parallèle sur un radiateur (3) formant partie dudit circuit (figure 3).

5. Dispositif conforme à la revendication 4, **caractérisé en ce que** ledit deuxième point (P₃) est placé dans ledït circuit de refroidissement, en sortie dudit échangeur (21).

6. Dispositif conforme à l'une quelconque des revendications 1 à 5, **caractérisé en ce que** le fluide circulant dans le circuit de fluide est de même nature que celui contenu dans le réservoir (R), qui communique directement avec ledit circuit de fluide.

7. Dispositif conforme à la revendication 6, **caractérisé en ce que** ledit réservoir (R) contient en outre un matériau du groupe constitué par : une zéolite, un charbon actif, l'hydroxyde de baryum, un ou des sels fondus.

8. Dispositif conforme à l'une quelconque des revendications 1 à 5, **caractérisé en ce que** le fluide contenu dans ledit réservoir (R) est différent de celui circulant dans ledit circuit de fluide et circule en circuit fermé entre ledit réservoir (R) et des échangeurs de chaleur disposés auxdits premier (P₁, P₂), deuxième (P₃) et troisième (P₄) points, lesdits échangeurs étant traversés par les deux fluides en relation de transfert thermique.

9. Dispositif conforme à l'une quelconque des revendications 1 à 8, **caractérisé en ce que** l'entrée dudit réservoir (R) est sélectivement connectable à une pluralité de points (P₁, P₂) à une température supérieure à celle (TR) du fluide dudit réservoir (R) et **en ce que** lesdits moyens (C, V₁ à V₄) de connexion commandement sélectivement l'établissement d'une connexion entre ladite entrée et celui des points (P₁, P₂) où la température du fluide dudit circuit est la plus élevée.

10. Dispositif conforme à l'une quelconque des revendications 1 à 9, **caractérisé en ce que** l'entrée dudit réservoir (R) est sélectivement connectable à une pluralité de points à une température inférieure à celle (TR) du fluide dudit réservoir (R) et **en ce que** lesdits moyens (C, V₁ à V₄) de connexion commandent sélectivement l'établissement d'une connexion entre ladite entrée et celui desdits points où la température du fluide du circuit est la plus basse.

11. Dispositif conforme à l'une quelconque des revendications 1 à 10, **caractérisé en ce que** la sortie dudit réservoir (R) est sélectivement raccordable à plusieurs points dudit circuit de fluide.

12. Dispositif conforme à l'une quelconque des revendications 2 et 3, dans lequel ladite pile à combustible (1) est alimentée par de l'hydrogène produit dans un reformeur (44), **caractérisé en ce que** le fluide circulant dans ledit réservoir (R) est en outre en relation de transfert thermique avec ledit reformeur (44).
